(19) Europäisches Patentamt
European Patent Office
Office européen des brevets

(11) **EP 2 259 741 B1**

(12) **EUROPEAN PATENT SPECIFICATION**

(45) Date of publication and mention
of the grant of the patent:
**08.11.2017 Bulletin 2017/45**

(21) Application number: **09727188.6**

(22) Date of filing: **31.03.2009**

(51) Int Cl.:
**G02C 7/04** *(2006.01)*

(86) International application number:
**PCT/US2009/038939**

(87) International publication number:
**WO 2009/124040 (08.10.2009 Gazette 2009/41)**

(54) **UNIVERSAL CONTACT LENS POSTERIOR SURFACE CONSTRUCTION**

HINTERER OBERFLÄCHENAUFBAU VON UNIVERSALKONTAKTLINSEN

CONSTRUCTION DE SURFACE POSTÉRIEURE D'UNE LENTILLE DE CONTACT UNIVERSELLE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **01.04.2008 US 41409 P**

(43) Date of publication of application:
**15.12.2010 Bulletin 2010/50**

(73) Proprietor: **Scientific Optics, Inc.
New York, NY 10022 (US)**

(72) Inventors:
• **LIEBERMAN, David, M.
New York
NY 10022 (US)**
• **GRIERSON, Jonathan
Atwater
OH 44201 (US)**

(74) Representative: **Portch, Daniel et al
Elkington and Fife LLP
Prospect House
8 Pembroke Road
Sevenoaks, Kent TN13 1XR (GB)**

(56) References cited:
**EP-A1- 0 683 416      EP-A2- 0 359 084
WO-A1-94/25887      WO-A1-97/34185
WO-A1-02/061497      WO-A2-2004/109368
WO-A2-2007/104013      US-A1- 2006 189 966**

## Description

## BACKGROUND OF THE INVENTION

The present invention relates generally to a method and apparatus for contact lens construction, and, more particularly concerns a method and apparatus for providing a universal construction for the non-optical peripheral area of a contact lens which rests on the eye, hereafter referred to as the "carrier."

Most common defects in human vision are caused by the inability of the eye to focus incoming light to a common focal point on the retina. For example, nearsightedness can be attributed to an eye which focuses light anterior to the retina, farsightedness can be attributed to an eye which focuses incoming light posterior to the retina, and astigmatism can be attributed to an eye which does not have a common focal point. Human optical scientists frequently model the cornea as a portion of an ellipsoid defined by orthogonal major and minor axes.

Today, vision is commonly improved in one of two ways: either a lens is placed in front of the eye (e.g. a contact lens or a spectacle lens) or within the eye (e.g. an intraocular lens) to refocus incident light into the eye appropriately. Alternatively, the effective external surface shape of the cornea is changed, as by laser ablation surgery or other surgical means, to alter the anterior surface shape of the cornea. Such surgical procedures for correcting visual acuity are typically directed at increasing or decreasing the surface curvature of the cornea. Some procedures are intended to make the corneal shape more spherical, and others are intended to change the corneal shape to an "average" ellipse, or more recently, to making corrections based on wavefront analysis, a methodology that is intended to correct for the "higher order aberrations" of the eye.

In International Application PCT/US07/63572 (published under No. WO 2007/104013), owned by the assignee of the present patent application, we describe a method useful for optical lenses and operations performed on the eye to provide universal vision improvement at all distances. For example, a contact lens or corneal surgery that provides an effective reshaping of the cornea to have a "turtleback" will provide such universal improvement in vision. A "turtleback" shaped cornea exhibits the flattest surface curvature at a point lying at the edge closest to the nose, where surface curvature is determined along a half-meridian from that point to a central point on the cornea. Moving upwardly and about the perimeter of the cornea, the surface curvature will increase continuously until it reaches a maximum at the vertical extreme of the cornea. The surface curvature will then decrease continuously until it reaches an intermediate value at the edge of the cornea most distant from the nose, will increase continuously to a maximum at the vertically lowermost edge of the cornea, and will decrease continuously until it returns to its minimum at the edge of the cornea closest to nose. Such a shape was described in terms of an m-wave, a curve generally shaped like a lower case letter "M", which represents the surface curvature of the modified cornea as a function of angular displaced about a reference point of the cornea known as the HIGH point.

Our prior surface analysis of the eye has concentrated on the cornea and particularly, a portion of the surface of the eye within an 8 mm diameter of the optical center. We are now seeking a universal shape for the posterior surface of a contact lens, to achieve optimal fit, and we are extending the analysis to the limbus, the transition to the sclera, and approximately the two proximal millimeters of the sclera. In addition to the posterior surface of the lens in the optical zone, of particular interest is an area of the eye corresponding to a portion of a contact lens constituting the non-optical peripheral area of the contact lens which rests on the eye. In conventional contact lenses, the optical portion of the lens falls to the surface of the eye. In a soft contact lens, the carrier area will generally begin at approximately 8 mm or 9 mm and extend to 12 mm or 15 mm. In a small corneal Rigid Gas Permeable (RGP or "hard") lens, the carrier will typically cover an area peripheral to the optical zone and extending from a diameter of approximately 7 mm to 9 mm. It is also possible to manufacture an RGP lens that approximates the size of a soft contact lens. One of the objects of the present invention is to provide a contact lens with a posterior optical area or carrier area that is superior to existing lenses and that approximates the shape of the underlying topology of the eye. Another object is to provide a posterior surface structure which is universal or generic in that a single posterior optical area and carrier structure would be effective for most normal eyes.

What has been missing from contact lenses constructed in this manner is a universal construction for the posterior surface of a lens that will conform to virtually every eye. This would make it possible to fit any non-diseased eye with a universal contact lens or one of a small set of universal contact lenses.

## SUMMARY OF THE INVENTION

Making use of the analysis of clinical measurements in accordance with the surface modeling techniques disclosed in U.S. Patent No. 5,807,381 the applicants have discovered that the carrier region extending beyond the optical portion of a contact lens overlying the cornea of an eye can be modeled in one universal shape that will fit most normal eyes.

Accordingly, the invention provides a contact lens for an eye, the lens having a posterior surface with an inner optical portion and a non-optical peripheral carrier portion which rests at least partially on the eye, the carrier portion being shaped so that inward of a reference diameter about a reference axis, the radius of curvature of points on the posterior surface varies substantially linearly with distance from the reference axis at a first rate-of change, and outward of the reference diameter the radius of curvature of points on the posterior surface varies substantially linearly with distance from the reference axis at a second rate-of change, the second rate-of change being greater than the first rate-of change, whereby the carrier portion will have a universal shape fitting most normal eyes.

The shape can be characterized by a curve of radius of curvature versus distance from the High point which is substantially linear with a first slope below a 10mm diameter of the eye as projected onto a plane perpendicular to the optical axis, is substantially linear above 10mm with a second slope which is substantially greater than the first slope, and which has an inflection point in the vicinity of approximately 10mm. Preferably the first linear portion has a radius of curvature of approximately 7.6 mm at a diameter of about 7mm, with a slope of about 0.13 (the first slope) and a radius of curvature of about 9mm at a diameter of 12mm, with a slope of about 0.45 (the second slope).

Similarly, the applicants have found that the posterior surface of the optical zone of a lens can be modeled as an M-wave shape which is the same for all eyes. This will provide the closest fit of the lens over the cornea and minimize optical distortion due to the tear film between the lens and the cornea.

In another aspect the invention provides the contact lens as defined above wherein the optical portion is constructed to have an M-wave shape having circumferential variation of curvature, and exhibiting the least surface curvature at a point lying at a first reference point on the optical portion, the surface curvature increasing continuously moving upwardly about the optical portion, until it reaches a maximum at a second reference point, the surface curvature decreasing continuously until it reaches an intermediate value at a third reference point, increasing continuously to a maximum at a fourth reference point, and decreasing continuously until it returns to its minimum at the first reference point.

## BRIEF DESCRIPTION OF THE DRAWINGS

The foregoing brief description and further objects, features and advantages of the present invention will be understood more completely from the following detailed description of presently preferred embodiments, with reference being had to the accompanying drawings in which:

FIG. 1 is a block diagram illustrating a method for achieving vision correction in accordance with the present invention through either laser ablation of the cornea or an appropriately shaped corrective lens;
FIG. 2 is a schematic diagram illustrating a plan view of a point cloud as obtained with a corneal image capture system;
FIG. 3 is a schematic plan view similar to Fig. 2 illustrating a plurality of splines and how they are connected through the data points of the point cloud;
FIG. 4 is a perspective view of a cornea matching surface illustrating how characterizing curves are constructed;
FIGS. 5A-5D (also referred to collectively herein as FIG. 5) are graphs of average radius of curvature of ten eyes as a function of Top Down Diameter of Regard at axis 0, 90, 180 and 270, respectively;
FIGS. 6A-6F (hereinafter also referred to collectively as FIG. 6) illustrate graphs of average radius of curvature (for ten eyes) as a function of angular orientation at Diameters of Regard of 12 mm, 11 mm, 10 mm, 9 mm, 8mm and 7 mm, respectively ;
FIGS. 7A-7D (also referred to herein collectively as FIG. 7) are graphs of radius of curvature as a function of Diameter of Regard for ten different eyes at axis 0, 90, 180 and 270, respectively;
FIGS. 8A-8D graph the variation of Z-depth as a function of Diameter of Regard at axis 0, 90, 180 and 270, respectively;
FIG. 9 is a graph showing the average of all four graphs in FIG. 8;
FIG. 10, comprised of FIGS. 10A-10F, presents graphs of Z-depth as a function of angular orientation for Diameters of Regard of 12 mm, 11mm, 10 mm, 9 mm, 8 mm and 7 mm, respectively;
FIG. 11, comprising Figs. 11(A) - 11(C), illustrates three waveforms which are useful in describing the idealized turtleback corneal shape for universal correction of vision;
FIG. 12 is the average half meridian curvature (in diopters) of the corneas of eight different patients with excellent vision as a function of angular orientation, at a diameter of regard of 7 mm; and
FIG. 13 is an idealized version of the graph of Fig. 12, which preferably will be used to define the universal shape of the optical zone of the posterior surface of a contact lens.

## DETAILED DESCRIPTION OF THE PREFERRED EMBODIMENTS

In conjunction with modern corneal procedures, such as corneal ablation surgery, for clinical applications, and for contact lens design and manufacture, high resolution cameras are used to obtain a digitized array of discrete data points on the corneal surface. One system and camera which have been available for mapping the cornea is the PAR Corneal Topography System (PAR CTS) of PAR Vision Systems. The PAR CTS maps the corneal surface topology in three-dimensional Cartesian space, i.e., along x- and y-coordinates as well as depth (Z) coordinate. Other systems that have worked successfully include the EyeShape system, provided by BioShape AG of Berlin, Germany and the Pentacam eye scanner, available from Oculus, Inc., of Lynnwood, WA.

The "line-of-sight" is a straight line segment from a fixation point to the center of the entrance pupil.

As described more fully in Mandell, "Locating the Corneal Sighting Center From Videokeratography," J. Refractive Surgery, V. 11, pp. 253-259 (July/August 1995), a light ray which is directed toward a point on the entrance pupil from a point of fixation will be refracted by the cornea and aqueous humor and pass through a corresponding point on the real pupil to eventually reach the retina.

The point on the cornea at which the line-of-sight intersects the corneal surface is the "optical center" or "sighting center" of the cornea. It is the primary reference point for refractive surgery in that it usually represents the center of the area to be ablated in photorefractive keratectomy. The line-of-sight has conventionally been programmed into a laser control system to govern corneal ablation surgery. However, some surgeons prefer to use the pupillary axis as a reference line. Other surgeons center the ablation profile about the corneal apex usually defined as the area on the cornea of greatest curvature change. Experienced practitioners have employed various techniques for locating the sighting center. In one technique, the angle lambda is used to calculate the position of the sighting center relative to the pupillary ("optic") axis. See Mandell, supra, which includes a detailed discussion of the angles kappa and lambda, the disclosure of which is incorporated herein by reference as if set forth in its entirety herein.

During the corneal ablation procedure, such as LASIK, a portion of the corneal surface is reflected and the ablation performed on the exposed surface. The gathered elevational data is used to direct an ablation device such as a laser, so that the corneal surface can be selectively ablated to more closely approximate a spherical surface of appropriate radius about the line-of-sight, or an "average" ellipse, or a wavefront fingerprint within the ablation zone. The use of the line-of-sight as a reference line for the procedures may reduce myopia or otherwise correct a pre-surgical dysfunction or a visual abnormality. However, a more irregularly shaped cornea may result, which may exacerbate existing astigmatism or introduce astigmatism or spherical aberration in the treated eye. This will complicate any subsequent vision correction measures that need be taken. Also, any substantial surface irregularities which are produced can cause development of scar tissue or the local accumulation of tear deposits, either of which can adversely affect vision.

Implicit in the use of the-line-of sight or the pupillary axis as a reference axis for surgical procedures is the assumption that the cornea is symmetric about an axis extending along a radius of the eye. The cornea, however, is an "asymmetrically aspheric" surface. "Aspheric" means that the radius of curvature along any corneal "meridian" is not a constant (a "meridian" could be thought of as the curve formed by the intersection of the corneal surface and a plane containing the pupillary axis). Indeed, the corneal curvature in most eyes tends to flatten progressively from the geometric center to the periphery. "Asymmetric" means that the corneal meridians do not exhibit symmetry about their centers. The degree to which the cornea is aspheric and/or asymmetrical varies from patient to patient and from eye to eye within the same person.

Analysis of clinical measurements in accordance with the surface modeling techniques of U.S. Patent No. 5,807,381 reveals that the point on the surface of the cornea which is most distant from the reference plane of the PAR CTS (hereafter referred to as the HIGH point) is a far more effective reference point for corneal ablation and lens design than the center of the cornea or the pupillary center. Specifically, as demonstrated in Patent No. 5,807,381 laser ablation about an axis passing through the HIGH point produces a much more regularly shaped cornea and removes less corneal material than the same operation performed about an axis close to the center of the eye, such as the pupillary axis.

Analysis of clinical measurements in accordance with the methods of U.S. Patent No. 5,807,381 and International Application No. PCT/US03/1763 (published as WO03/101341), raises questions about assumptions that have been made about the structure of the human cornea which are inherent in such well-known corneal analysis technologies as wave-front analysis and Placido disc technology. In particular, it was found that, unlike other optical systems, the central portion of the cornea (for example, out to a 3mm diameter) is not necessarily optically superior to substantially greater portions of the cornea (for example, out to a 7mm diameter) in its ability to focus. The central portion of the cornea exhibits a great deal of focus scattering. That is, different regions on the cornea do not focus to the same point on a focal axis. Indeed, they do not even focus on the same axis. This focus difference is usually most pronounced in the central portion of the cornea and decreases substantially at increasing diameters from the center.

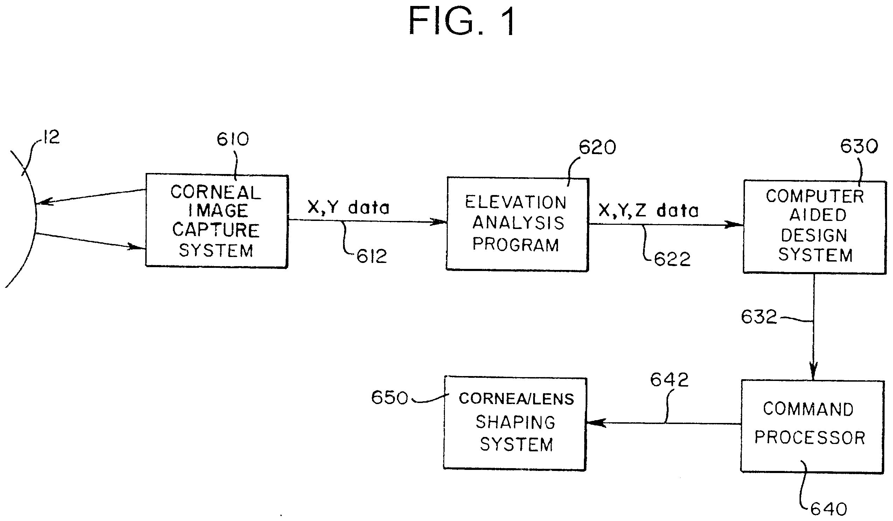

A process for achieving corneal or contact lens shaping in accordance with the present invention is illustrated in block diagram form in Fig. 1. The process makes use of a Corneal Image Capture System 610, an Elevation Analysis Program 620, a Computer Aided Design System 630, a Command Processor 640 and a Cornea Shaping System 650. The Corneal Image Capture System 610, in conjunction with the Elevation Analysis Program 620, generates a three dimensional topographic map of the cornea of the patient. The Computer Aided Design System 630 is used as an aid in editing or modifying the corneal topographic data, to create a surface model, and data relating to the model is sent to a Cornea Shaping System 650 via the Command Processor 640. The Command Processor 640 uses the topographic data describing the surface of the cornea to be shaped from the Computer Aided Design System 630 to generate a sequence of commands/control signals required by the Cornea/Lens Shaping System 650. The Cornea/Lens Shaping System 650 accepts, from the Command Processor 640, a sequence of commands that describe the three dimensional movements of the Cornea/Lens Shaping System (any coordinate system may be used; e.g.,

Cartesian, radial or spherical coordinates) to shape the cornea or machine (e.g., a lathe) manufacturing a contact lens.

The Corneal Image Capturing System 610 and the Elevation Analysis Program 620 are preferably components of the PAR® Corneal Topography System ("the PAR® System"), which is available from PAR Vision Systems. The Elevation Analysis Program 620 is a software program executed by a processor, for example an IBM™ compatible PC. Program 620 generates a third dimension element (a Z coordinate representing distance away from a reference plane inside the eye) for each of a plurality of sample points on the surface of the cornea measured by system 610. Each point is defined by its X-Y coordinates as mapped into the reference plane, and its Z coordinate is determined from brightness of the point. One method of calculating the elevation of each point, i.e., the Z coordinate, is by comparing the X-Y and brightness values measured from the patient's cornea 14 with the coordinates and brightness of some reference surface with known elevation, e.g., a sphere of a known radius. The reference values can be prestored.

The final output of the Elevation Analysis Program 620 is the X-Y-Z coordinates for a multiplicity of sample points, commonly known as a point cloud, on the surface of the cornea 14. It will be apparent to those skilled in the art that any method can be used that can generate X, Y, Z corneal data providing both location and elevation information for points on the corneal surface with the required accuracy. In the preferred embodiment about 1200 points are spaced in a grid pattern, as viewed in the X-Y plane, so the projections of the points into the X-Y plane are about 200 microns apart.

The X-Y-Z data output from the Elevation Analysis Program 620 can be formatted in any number of well-known machine-specific formats. Preferably, the data are formatted in Data Exchange File (DXF) format, an industry standard format which is typically used for the inter-application transfer of data. A DXF file is an ASCII data file, which can be read by most computer aided design systems.

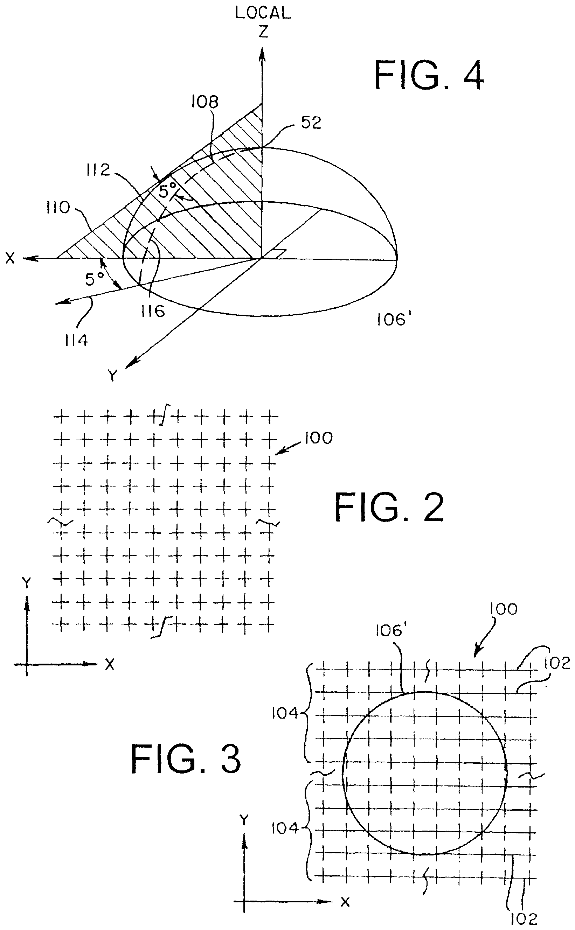

Referring now to Figs. 2 and 3, a point cloud 100 is depicted as it would appear when viewing the reference plane along the Z-axis (i.e., as projected into the X-Y plane). Each point corresponds to a particular location on the patient's cornea. The data are usually generated from an approximately 10mm x 10mm bounded area of the cornea, the working area. Thus, there may be as many as 50 rows of data points. A surface 108 (see Fig. 4), that models or matches the topography of the surface of the patient's cornea is generated by the computer aided design system 630 from the data points generated by the Elevation Analysis Program. In a preferred embodiment, Computer Aided Design System 630 is the Anvil 5000™ program which is available from Manufacturing Consulting Services of Scottsdale, Arizona.

Cornea matching surface 108 is preferably produced by first generating a plurality of splines 102, each defined by a plurality of the data points of the point cloud 100. The generation of a spline that intersects a plurality of data points (i.e., knot points) is, per se, known to those skilled in the art and can be accomplished by the Anvil 5000™ program once the input data have been entered. For more information regarding the generation of a surface model, see U.S. Patent No. 5,807,381. In a preferred embodiment, the known non-uniform rational B-spline formula is used to generate the splines, but they could be generated by other well-known mathematical formulas for splines, such as the cubic spline formula or the rational uniform B-spline formula. As illustrated in Fig. 3, in a preferred embodiment, each of the splines 102 lies in a plane that is parallel to the X and Z axes and includes a row of points from the cloud 100 in Fig. 3.

Surface 108, which matches the corneal surface of the scanned eye, is then generated from splines 102. There are a number of well-known mathematical formulas that may be used to generate a surface from a plurality of splines 102. In the preferred embodiment, the well known nurb surface equation is used to generate a corneal surface from splines 102. In the embodiment, because the scanned area of the eye is approximately 12mm x 12mm, approximately 50 splines 102 are created. As illustrated in Fig. 3, a skinned surface segment 104 is created for a small number (e.g., five) of the adjacent splines. Adjacent skinned surface segments 104 share a common border spline. Thus, about ten skinned surface segments are generated from the point cloud and are then merged together by the Anvil 5000™ program in a manner known to those skilled in the art, to produce one composite surface 108.

Neither the original data points, nor the knot points of splines 102 necessarily lie on-surface 108, owing to the mathematical generation of the surface when using the nurb surface equation formula. However, the surface 108 estimates those points within a predefined tolerance.

The HIGH point on the generated corneal matching surface 108 (i.e., the point having the greatest Z value) is determined. A cylinder 106 of a predetermined diameter is then projected onto the corneal matching surface 108 along an axis which is parallel to the Z-axis and passes through the HIGH point. Cylinder 106 preferably has a diameter of about 3mm to about 8mm, typically about 7mm, and the closed contour formed by the intersection of cylinder 106 with surface 108 projects as a circle 106' in the X-Y plane. On the matching surface 108, this contour defines the outer margin 26 of the working area of the cornea. The cornea is the most symmetric and spherical about the HIGH point and, therefore, provides the best optics at this point.

The outer margin 26 must fit within the point cloud, so that the surfaces of the cornea can be formed based on the measured corneal data. The computer aided design system 630 can then illustrate a default circle 106' (in the X-Y plane) with respect to the point cloud, for example on a monitor screen, so that the operator can be assured that circle 106' falls within the point cloud. Additionally, system 630 can be set up to determine if circle 106' falls within point cloud 100 and, if it does not fall completely within point cloud 100, to alert the user to manipulate the circle (i.e., move the center point and/or change the radius of the circle) so that circle 106' lies within the corneal data point cloud 100. In a worst case scenario, the eye should be rescanned if insufficient data is available from the scanned eye to ensure that the working area of the cornea will fit properly within the point cloud. Alternatively, the area of the point cloud can be made larger.

It is to be understood that circle 106' is only a circle when viewed in the X-Y plane (i.e., looking along the Z-axis). Actually, the periphery 26 is approximately elliptical and lies in a plane which is tilted relative to the reference plane. A line Perpendicular to this tilted plane which passes through the HIGH point will be referred to as the "LOCAL Z-AXIS" or "tilted axis," and the tilt of the tilted plane relative to the reference plane will be considered the tilt angle of the working area of the cornea.

Optical lenses manufactured in accordance with the present invention, will seek to correct the patient's vision in accordance with the required corrections established in a "refraction test." When this test is performed, the patient sits in chair which is fitted with a special device called a "phoropter," through which the patient looks at an eye chart approximately 20 feet away. As the patient looks into the phoropter, the doctor manipulates lenses of different strengths into view and, each time, asks the patient whether the chart appears more or less clear with the particular lenses in place. In practice, the doctor is able to vary the power or diopter correction about two orthogonal axes, as well as the degree of rotation of those axes about a Z-axis along the line-of-sight. The doctor continues to modify these three parameters until he achieves the optimum vision. The results of the refraction test are usually given in the form "a, b, c," where " a" is the diopter correction at the first axis, "b" is the additional diopter correction required at the second, orthogonal axis, and "c" is the angle of rotation of the first axis relative to the horizontal. This form of information is given for each eye and is immediately useful in grinding a pair of lenses for eyeglasses.

There will now be described a technique for generating characterizing curves on surface 108, which will be useful below. A plane 110 is constructed which contains the LOCAL Z-AXIS (See Fig. 4). The intersection between plane 110 and surface 108 defines a first characterizing curve 112. Plane 110 is then rotated about the LOCAL Z-AXIS, for example by a 5° increment counterclockwise, as represented by line 114, where its intersection with surface 108 defines a second characterizing curve 116, which is illustrated as a dashed line in Fig. 4. This process continues at fixed rotational increments about the LOCAL Z-AXIS, for example every 5°, until plane 110 has swept 360°, to produce a complete set of characterizing curves (meridians), in this case seventy-two (360° % 5°).

Each of these characterizing curves is then estimated by a best-fit spherical (circular) arc. One manner of doing this is simply to select a circular arc which passes through three known points for each curve (e.g., the point at which it touches the contour 106', the HIGH point, and that point which is halfway between those two points when viewed in projection along the local Z axis). The radius of such an arc is used as an estimate of the radius of curvature for the contour 106' along the arc.

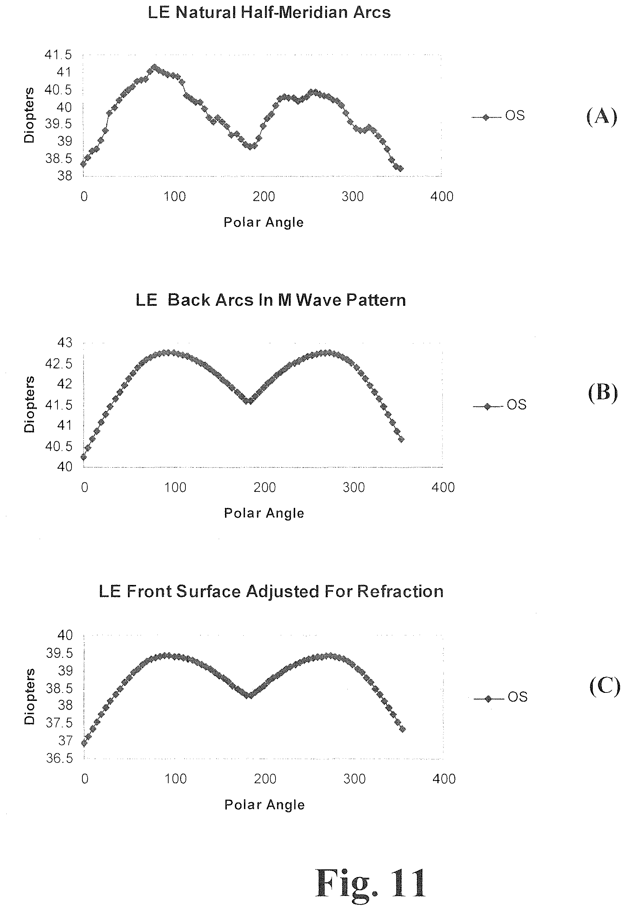

Fig. 11 comprising Figs. 11(A)-11(C), illustrates three waveforms which are useful in describing the idealized turtleback shape. Each of the waveforms is a polar graph of curvature (given in diopters) as a function of rotational position. For example, waveform A represents the cornea of an actual patient that is nearsighted, astigmatic, and exhibits age-related presbyopia. The polar angle is the rotational angle of a plane containing the local z axis (about the local z axis) relative to a reference position (0 degrees) at which the plane intersects the base of the cornea at a position closest to the nose. The curvature is the diopter equivalent of the radius of a circular arc which most closely approximates the half-meridian arc created by the intersection between the surface of the cornea and the plane when it has the particular rotational orientation. The following well-known formula relates the diopter value to the radius of the arc:

$$337.5/\text{Arc Radius} = \text{Diopter Value}$$

Ideally (for the best universal improvement of vision), waveform A should be shaped like a letter "M" and it is therefore referred to herein as the "M-wave" of the cornea. It is, in the present instance, a somewhat distorted M.

As an initial step in redesigning the shape of a cornea to exhibit universal vision improvement, an idealized M-wave is generated for the cornea. Starting with a polar representation of the patient's cornea showing the surface curvature along the natural half-meridian arcs of the particular corneal surface, such as waveform A, an idealized waveform is generated. This waveform is not related to waveform A, except the lowest diopter values are preferably approximately the same in the two waveforms, but waveform B does need to meet certain criteria. First of all, the peak-to-peak diopter variation of the waveform is adjusted to be approximately 3 diopters, preferably about 2.875 diopters. It has been found that there is substantial deterioration in near vision correction if this diopter range drops below about 2 diopters or exceeds about 4 diopters. In addition, the dip D in the M-wave is adjusted so as to lie between approximately 40% and 60% of the peak-to-peak amplitude of the M-wave. Preferably, it is approximately 50%. Then, the entire waveform is adjusted so as to transition smoothly between values. Preferably, the peaks occur at about 90° and 270°and the dip at approximately 180°, while producing a smooth curve. This results in the ideal M-wave to represent the patient's cornea. This wave is represented by waveform B in Fig. 11.

It will be appreciated that waveform B exhibits the flattest surface curvature at 0° (a point corresponding to the edge of the cornea that would be closest to the nose in waveform B). Increasing the polar angle, the surface curvature increases continuously until it reaches a maximum at about 90° (corresponding to the vertically uppermost edge of the cornea). The surface curvature then decreases continuously until it reaches an intermediate value, the dip, at about 180° (corresponding to the edge of cornea most distant from the nose), and it increases continuously to a maximum at about 270° (corresponding to the vertically lowermost edge of the cornea), and it decreases continuously until it reaches 0°, where it returns to its minimum. Thus, the surface described by this M-wave has the idealized turtleback shape discussed previously.

In the preceding paragraph it was assumed that the M wave for the patient's left eye was being considered. The reference or 0° angle was selected as the point closest to the nose and the polar angle increased in a counterclockwise direction.

In order to gain a better understanding of the requirements for a universal or generic contact lens carrier, we will first analyze the shape of a cornea in the nominal carrier region between 8 mm and 12 mm. For this purpose, corneal models were generated for 10 patients with normal corneas exhibiting corrected distance vision in the range of 20/20 or better and near vision in the range of Jaeger 2. For each patient, a graph of radius of curvature as a function of "Top Down Diameter of Regard" was provided at four different angular orientations about the HIGH point. The four angular orientations were axis 0 (0°), axis 90 (90°), axis 180 (180°) and axis 270 (270°). As a convention, the portion of the edge of the cornea closest to the nose was designated as 0°, and, looking at the left eye, angle would increase counterclockwise.

The "Top Down Diameter of Regard" at a particular point is the distance between the HIGH Point and the a particular point (the Point of Regard) as measured in a plane perpendicular to the tilted Z-axis (this will be referred to as the X-Y plane). The radius of curvature is estimated at a particular Diameter of Regard and angular orientation by generating a best-fit circular arc which contains the HIGH point and the Point of Regard. The best-fit arc will also include that point on the corneal model which is halfway between the HIGH point and Point of Regard in the X-Y plane. The radius of that circular arc is then used as an estimate of the radius of curvature at the Point of Regard.

Each graph of curvature versus Diameter of Regard was generated at a particular angular orientation at 0.5 mm increments of Diameter of Regard, ranging from 7 mm to 12 mm. At each angular orientation and Diameter of Regard, the radii of curvature of ten eyes were average, thus, the graphs to be discussed below represent the average of the ten eyes.

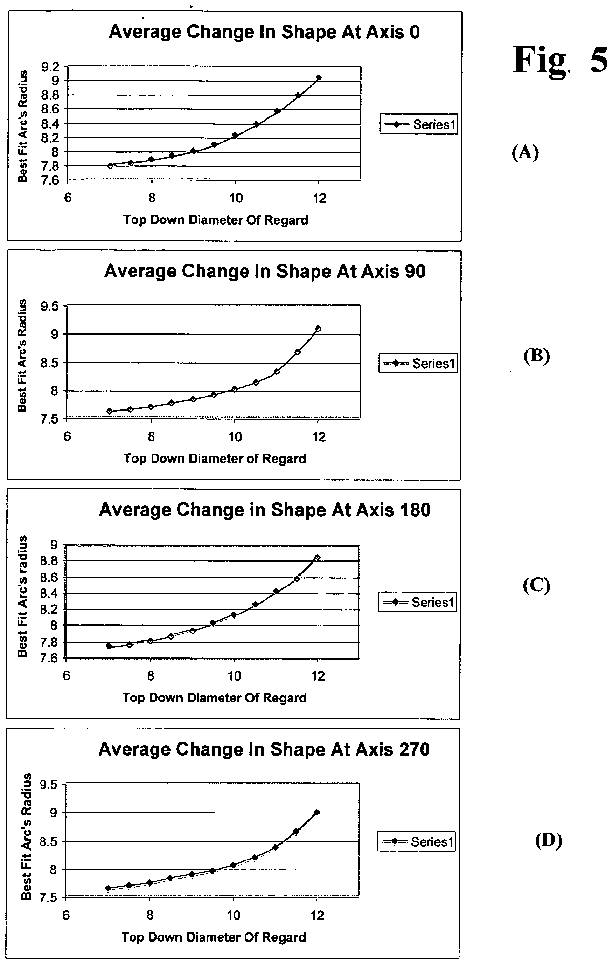

FIGS. 5A-5D (also referred to collectively herein as FIG. 5) are graphs of average radius of curvature of ten eyes as a function of Top Down Diameter of Regard at axis 0, 90, 180 and 270. Analyzing the four graphs, it may be seen that, at every Diameter of Regard, the radius of curvature starts at a value of nearly 7.6 mm and reaches a value of approximately 9 mm at a Diameter of Regard of 12 mm. As a general proposition, the average of all four graphs could be considered to be substantially linear below 10 mm with a first slope and substantially linear above 10 mm with a second, higher slope, there being effectively an inflection point in the vicinity of 10 mm. Below this inflection point, the slope of the curve is preferably approximately .13 mm per mm of Diameter of Regard and above 10 mm the slope is approximately .45 mm per mm of Diameter of Regard.

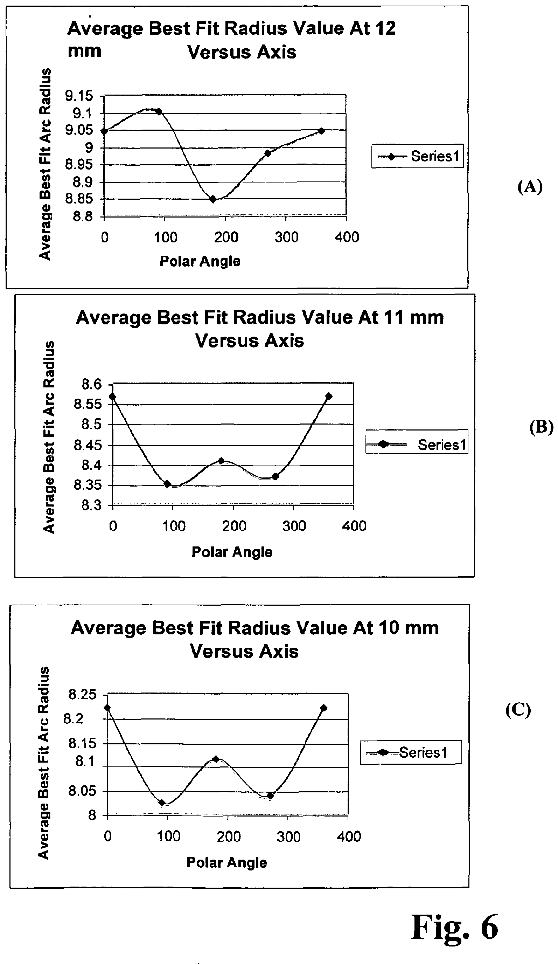

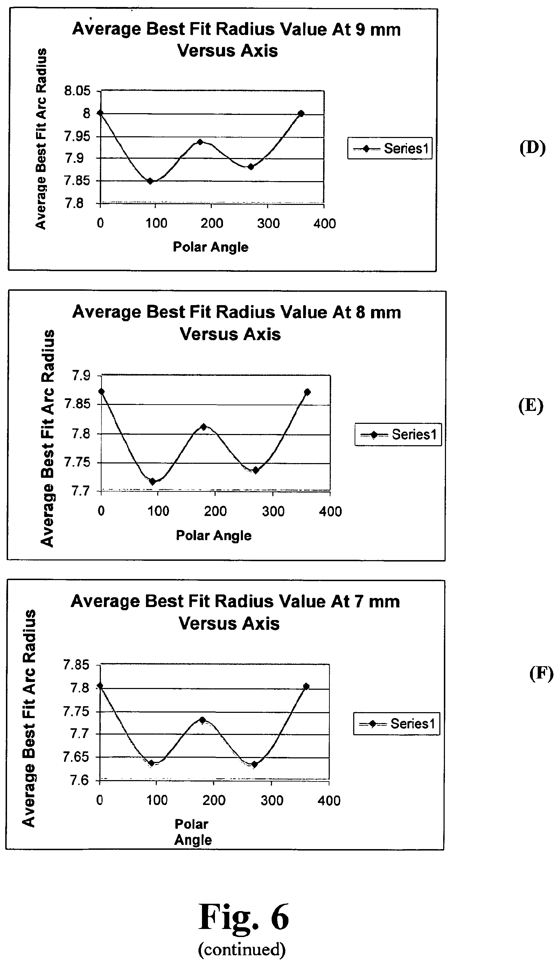

The foregoing information would permit the generation of a useful generic carrier model if the cornea were rotationally symmetric. However, it is not. In order to analyze the circumferential variation of the radius of curvature, we generated a set of graphs of radius of curvature as a function of angular orientation. FIGS. 6A-6F (hereinafter also refer to collectively as FIG. 6) illustrate such graphs at Diameters of Regard of 12 mm, 11 mm, 10 mm, 9 mm, 8mm and 7 mm, respectively. These graphs suggest that a generic carrier should be modeled at Diameters of Regard somewhat inside of 12 mm. Inside that range, the variation of curvature is a function of angular orientation may be modeled as an inverted "M-wave" of approximately 2 mm in height. However, the dip in the center of the "M" is not of a consistent percentage and, although the M-wave moves consistently downward, it does not seem to do so in an identifiable manner. It therefore appears that it may not be possible to produce a single generic carrier that will fit most normal eyes. Instead, it might require a set of lenses, each of which is somewhat different from the others.

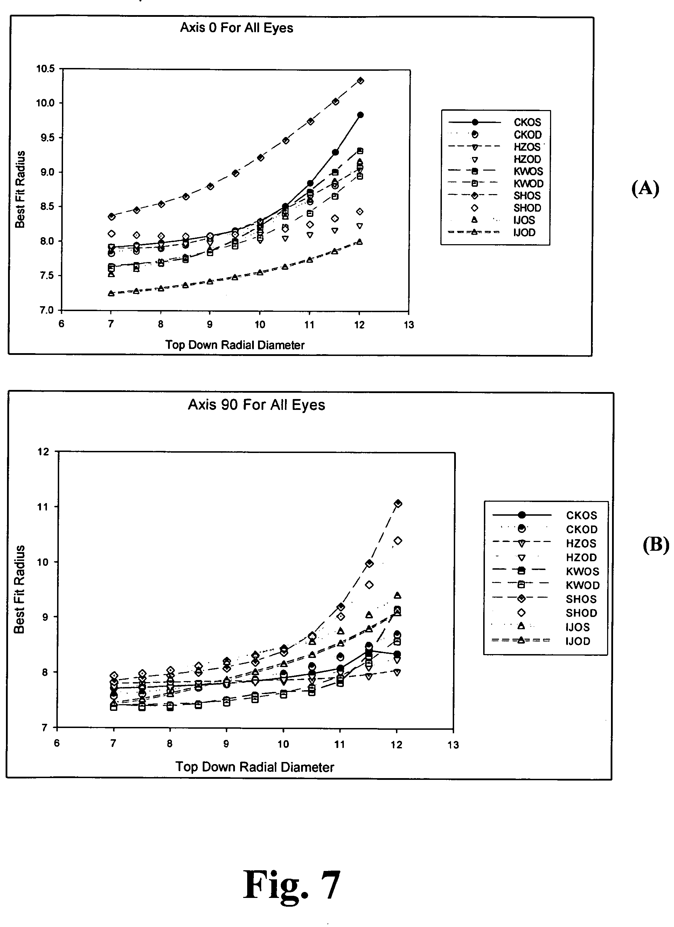

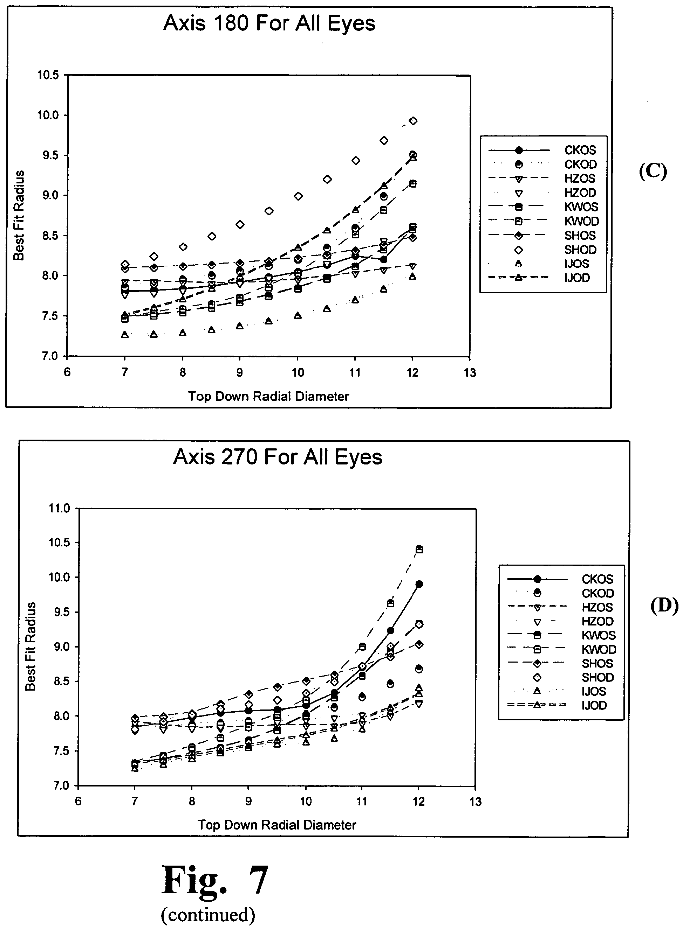

FIGS. 7A-7D (also refer to herein collectively as FIG. 7) are graphs, for the ten different eyes, of radius of curvature as a function of Diameter of Regard at axis 0, 90, 180 and 270, respectively. Taking these graphs into account in conjunction with the earlier information, it appears that a generic lens carrier should have a radius of curvature starting at about 7.6 mm at an 8 mm Diameter of Regard. However, for more complete coverage, it would probably be preferable to have a family of three graphs. A "small" graph would begin with approximately a 7.2 mm radius of curvature at 8 mm and a "large" graph would start at approximately a radius of curvature of 8 mm at an 8 mm Diameter of Regard. A medium graph would be as the first mentioned curve above. The variation of radius of curvature radially and circumferentially would follow the huristic rules established above.

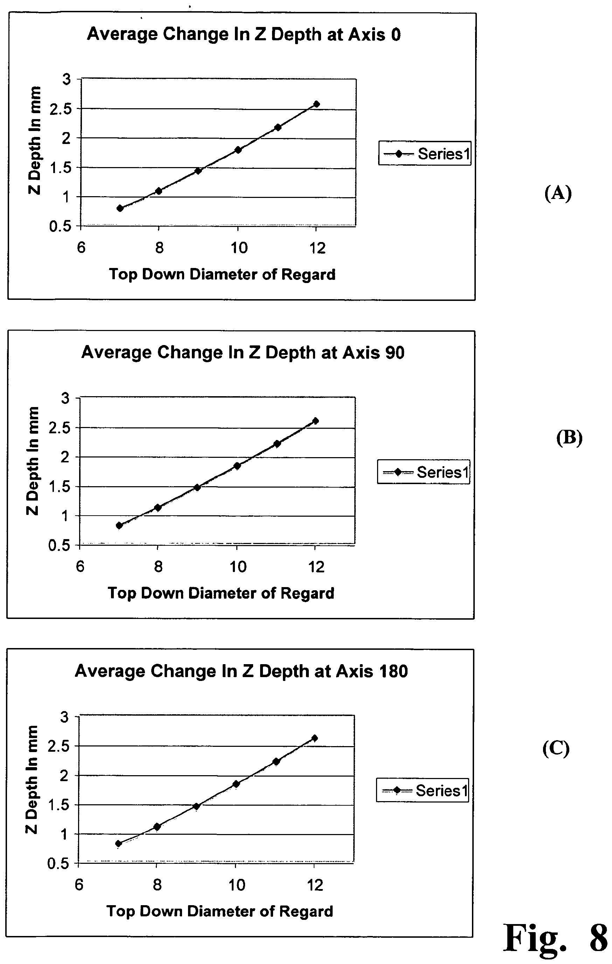

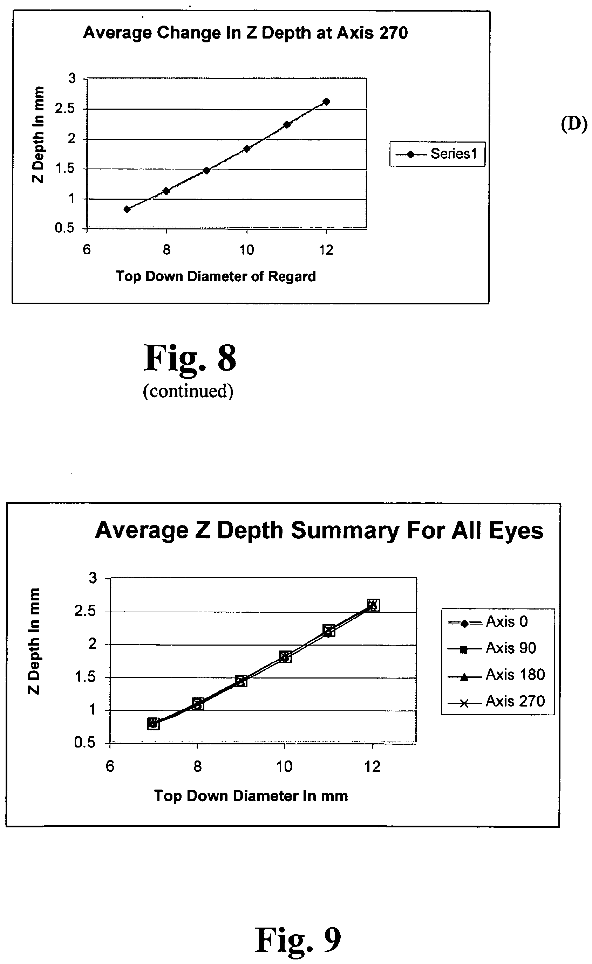

We have determined above that it might be preferred to have a set of lenses with three different size carriers, although the use of a single generic carrier may be possible. In order to determine the quality of fit of a carrier, we will perform a Z-depth analysis. This involves determining the variation in the carrier surface along the tilted Z-axis. Additionally, we will consider radial variation. FIGS. 8A-8D graph the variation of Z-depth as a function of Diameter of Regard at axis 0, 90, 180 and 270, respectively. These represent the average Z-depth of all ten eyes. FIG. 9 is a graph showing the average of all four graphs in FIG. 8. It should be noted that there is essentially no variation in Z-depth radially, regardless of angular orientation. Moreover, as will be demonstrated below, circumferential Z-depth variation at any Diameter of Regard does not exceed approximately .05 mm.

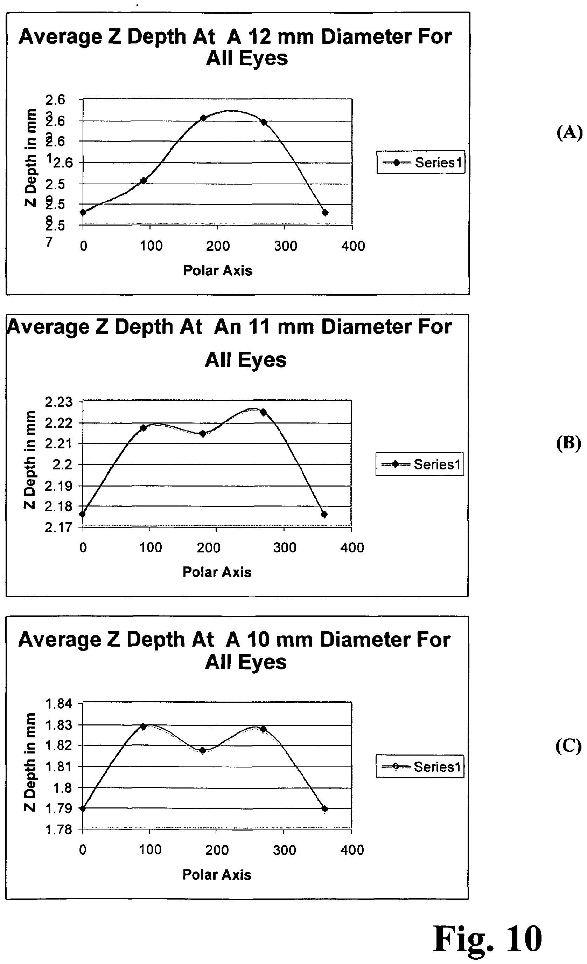

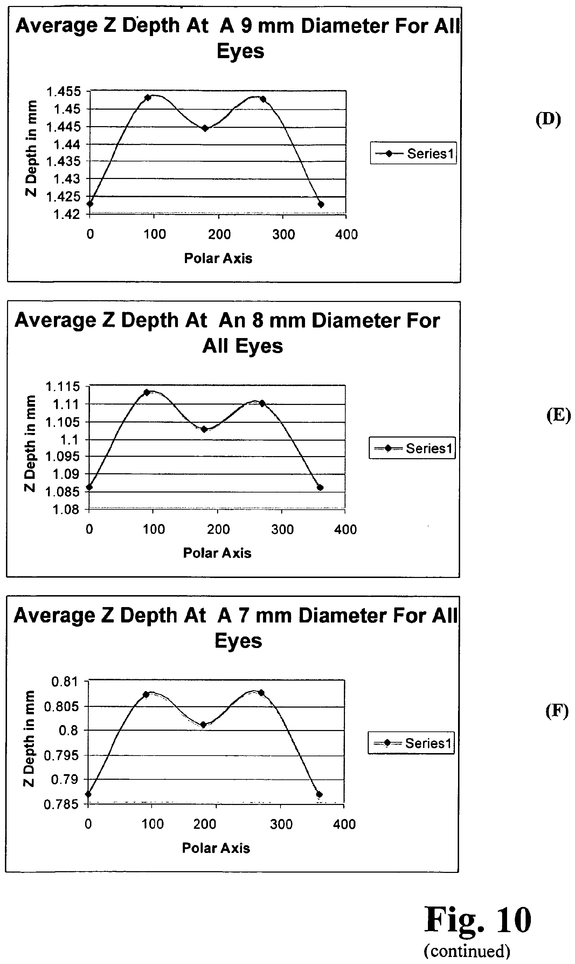

Referring to FIG. 10, comprised of FIGS. 10A-10F, they represented graphs of Z-depth as a function of angular orientation for Diameters of Regard of 12 mm, 11mm, 10 mm, 9 mm, 8 mm and 7 mm, respectively. In this case, the Z-depth is the average Z-depth of all ten eyes. It will be appreciated that the angular variation of Z-depth does not exceed approximately .05 mm. In comparison, the average radial variation of Z-depth exceeds 1.6 mm. Accordingly, circumferential variation of Z-depth is considered negligible compared to radial variation. An effective generic construction for carrier shape can therefore ignore circumferential variations of the eye model. As a result, an effective universal carrier shape can be designed on the basis of the results of FIG. 5 alone. That is, on the basis of a design curve of radius of curvature verses Diameter of Regard which has a value of approximately 7.8 mm at a Diameter of Regard of 8 mm with a slope of approximately .13; a value of approximately 9 mm and a Diameter of Regard of 12 mm, with a slope of .45; and an inflection point at approximately 10 mm. For practical purposes, the curve may be smoothed in the vicinity of the inflection point so as to provide a smooth transition between the two linear portions.

A slight improvement in the fit of the carrier portion may be achieved by imposing an inverted M-wave shape on the circumferential variation of the radius of curvature. The M-shape would have an amplitude of about .2 mm and central dip (actually a rise) of approximately .05 mm at a polar angle of approximately 180°.

Comparisons of the analysis results for left and right eyes suggest that the carrier areas for the two eyes should be mirror images of each other.

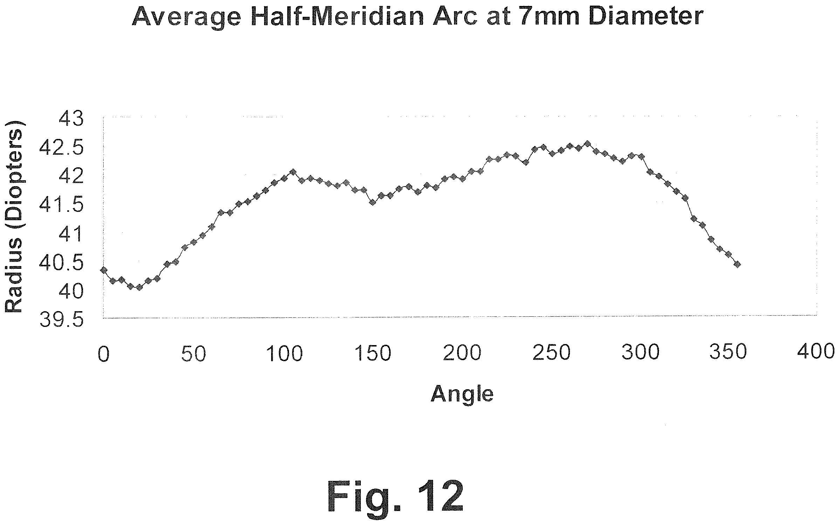

Fig. 12 is the average half meridian curvature (in diopters) of the corneas of eight different patients as a function of angular orientation, at a diameter of regard of 7 mm. These patients had normal corneas exhibiting corrected distance vision in the range of 20/20 or better and near vision in the range of Jaeger 2. It is believed that this curve is characteristic of corneas exhibiting corrected distance vision in the range of 20/20 or better, near vision in the range of Jaeger 2 and no refractive astigmatism. That is, a statistically average cornea exhibiting this type of vision would have a shape of its optical region exhibiting a curve substantially like FIG. 12.

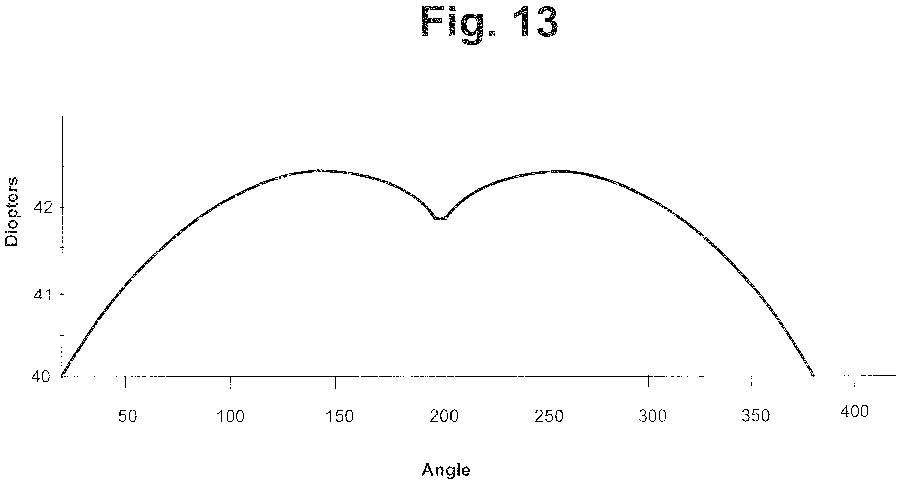

Accordingly, the graph of FIG. 12 has been idealized to have the appearance of FIG. 13, and the posterior optical zone of a contact lens will be shaped so as to exhibit the curve of FIG. 13. As may be seen, the shape of the posterior optical region is defined by an M-wave having an amplitude of about 2.5 diopters, a dip of about .5 diopters and a minimum value of about 40 diopters. The entire curve is shifted right by about 20° so that the minimum diopter values appear at about 20°. Using this as a universal shape for the posterior optical region will result in the best fit of that region for a large segment of the population. This will minimize the thickness of the tear film and its effect on vision.

Preferably, a contact lens in accordance with the present invention would have a carrier region having a shape described above and a posterior optical zone shaped in accordance with the graph of FIG. 13.

Although preferred embodiments of the invention have been disclosed for illustrative purposes, those skilled in the art will appreciate that many additions, modifications, and substitutions are possible without departing from the scope of the invention. For example, the present invention is applicable not only to corneal ablation and contact lenses, but to any other kind of lens, including cataract, phakic, intraocular, intracorneal and spectacle lenses.

## Claims

1. A contact lens for an eye, the lens having a posterior surface with an inner optical portion and a non-optical peripheral carrier portion which rests at least partially on the eye, **characterised in that** the carrier portion is shaped so that inward of a reference diameter about a reference axis, the radius of curvature of points on the posterior surface varies substantially linearly with distance from the reference axis at a first rate-of change, and outward of the reference diameter the radius of curvature of points on the posterior surface varies substantially linearly with distance from the reference axis at a second rate-of change, the second rate-of change being greater than the first rate-of change, whereby the carrier portion will have a universal shape fitting most normal eyes.

2. The contact lens of claim 1 wherein the reference diameter is approximately 10mm from the reference axis.

3. The contact lens of claim 1 wherein the carrier portion is constructed to have an inverted M-wave shaped circumferential variation of radius of curvature at a fixed distance from the reference axis, exhibiting a maximum radius of curvature at a point lying at the edge of the carrier portion closest to the nose when the lens is worn, the radius of curvature decreasing continuously moving upwardly along the carrier portion until it reaches a minimum near an upper vertical extreme of the carrier, increasing continuously until it reaches an intermediate value at the edge of the carrier most distant from the nose, decreasing continuously to a minimum at the vertically lowermost edge of the carrier, and increasing continuously until it returns to its maximum at the edge of the carrier closest to nose.

4. The contact lens of claim 3 wherein the M-wave shape has an amplitude of about .2 mm and an intermediate value approximately .05 mm above the minimum at a polar angle of approximately 180°.

5. The contact lens of claim 1 or 3 wherein the first rate-of change is approximately 0.13.

6. The contact lens of claim 1 or 3 wherein the second rate-of change is approximately 0.45.

7. The contact lens of claim 1, 5 or 6 wherein the lens has a radius of curvature of approximately 7.6 mm at a diameter of about 7mm and a radius of curvature of about 9mm at a diameter of 12mm.

8. The contact lens of claim 1 wherein the optical portion is constructed to have an M-wave shape having circumferential variation of curvature, and exhibiting the least surface curvature at a point lying at a first reference point on the optical portion, the surface curvature increasing continuously moving upwardly about the optical portion, until it reaches a maximum at a second reference point, the surface curvature decreasing continuously until it reaches an intermediate value at a third reference point, increasing continuously to a maximum at a fourth reference point, and decreasing continuously until it returns to its minimum at the first reference point.

9. The contact lens of claim 8 wherein the M-wave shape has an amplitude of about 2.5 diopters, an intermediate value about .5 diopters below the maximum and a minimum value of about 40 diopters.

10. The contact lens of claim 8 wherein the first reference point is rotationally offset approximately 20° from the point of the optical portion closest to the nose when the lens is worn and the second, third and fourth reference points are offset rotationally approximately 90°, 180° and 270°, respectively from the first reference point.

**Patentansprüche**

1. Kontaktlinse für ein Auge, wobei die Linse eine posteriore Oberfläche mit einem inneren optischen Abschnitt und einem nicht optischen, peripheren Trägerabschnitt aufweist, der wenigstens teilweise auf dem Auge liegt, **dadurch gekennzeichnet, dass** der Trägerabschnitt

so geformt ist, dass einwärts eines Referenzdurchmessers um eine Referenzachse der Krümmungsradius von Punkten auf der posterioren Oberfläche im Wesentlichen linear zu dem Abstand von der Referenzachse mit einer ersten Änderungsrate variiert, und auswärts des Referenzdurchmessers der Krümmungsradius von Punkten auf der posterioren Oberfläche im Wesentlichen linear zu dem Abstand von der Referenzachse mit einer zweiten Änderungsrate variiert, wobei die zweite Änderungsrate größer ist als die erste Änderungsrate, wodurch der Trägerabschnitt eine universelle Form aufweist, welche für die meisten Augen passt.

2. Kontaktlinse nach Anspruch 1, wobei der Referenzdurchmesser ungefähr 10 mm von der Referenzachse liegt.

3. Kontaktlinse nach Anspruch 1, wobei der Trägerabschnitt so gestaltet ist, dass er eine umgekehrte M-wellenförmige umfängliche Variation des Krümmungsradius in einem festen Abstand von der Referenzachse aufweist, wobei ein maximaler Krümmungsradius an einem Punkt vorgesehen ist, der am Rand des Trägerabschnitts am nächsten an der Nase liegt, wenn die Linse getragen wird, wobei der Krümmungsradius bei einer Bewegung nach oben entlang dem Trägerabschnitt kontinuierlich kleiner wird, bis er nahe eines oberen vertikalen Extrems des Trägers ein Minimum erreicht, wobei er kontinuierlich zunimmt, bis er einen intermediären Wert an dem Rand des Trägers erreicht, der am weitesten von der Nase entfernt ist, wobei er kontinuierlich bis auf ein Minimum an dem vertikal untersten Rand des Trägers kleiner wird, und wobei er kontinuierlich größer wird, bis er wieder dessen Maximum an dem Rand des Trägers am nächsten an der Nase liegend erreicht.

4. Kontaktlinse nach Anspruch 3, wobei die M-Wellenform eine Amplitude von etwa 0,2 mm und einen intermediären Wert von ungefähr 0,05 mm über dem Minimum bei einem Polarwinkel von ungefähr 180° aufweist.

5. Kontaktlinse nach Anspruch 1 oder 3, wobei die erste Änderungsrate ungefähr 0,13 beträgt.

6. Kontaktlinse nach Anspruch 1 oder 3, wobei die zweite Änderungsrate ungefähr 0,45 beträgt.

7. Kontaktlinse nach Anspruch 1, 5 oder 6, wobei die Linse einen Krümmungsradius von ungefähr 7,6 mm bei einem Durchmesser von etwa 7 mm aufweist und einen Krümmungsradius von etwa 9 mm bei einem Durchmesser von 12 mm.

8. Kontaktlinse nach Anspruch 1, wobei der optische Abschnitt so gestaltet ist, dass er eine M-Wellenform mit einer umfänglichen Krümmungsvariation aufweist und die geringste Oberflächenkrümmung an einem Punkt vorsieht, der auf einem ersten Referenzpunkt auf dem optischen Abschnitt liegt, wobei die Oberflächenkrümmung bei einer Bewegung um den optischen Abschnitt nach oben kontinuierlich zunimmt, bis sie an einem zweiten Referenzpunkt ein Maximum erreicht, wobei die Oberflächenkrümmung kontinuierlich abnimmt, bis sie an einem dritten Referenzpunkt einen intermediären Wert erreicht, und wobei sie kontinuierlich abnimmt, bis sie an ihr Minimum an dem ersten Referenzpunkt zurückkehrt.

9. Kontaktlinse nach Anspruch 8, wobei die M-Wellenform eine Amplitude von etwa 2,5 Dioptrien aufweist, einen intermediären Wert von etwa 0,5 Dioptrien unterhalb des Maximums und einen Minimumwert von etwa 40 Dioptrien.

10. Kontaktlinse nach Anspruch 8, wobei der erste Referenzpunkt einen Rotationsversatz von ungefähr 20° von dem Punkt des optischen Abschnitts am nächsten zu der Nase aufweist, wenn die Linse getragen wird, und wobei der zweite, der dritte und der vierte Referenzpunkt einen entsprechenden Rotationsversatz von ungefähr 90°, 180° bzw. 270° zu dem ersten Referenzpunkt aufweisen.

## Revendications

1. Lentille de contact pour un oeil, la lentille ayant une surface postérieure avec une partie optique interne et une partie porteuse périphérique non optique qui repose au moins partiellement sur l'oeil, **caractérisée en ce que** la partie porteuse est façonnée de sorte qu'à l'intérieur d'un diamètre de référence autour d'un axe de référence, le rayon de courbure de points sur la surface postérieure varie sensiblement linéairement avec la distance à partir de l'axe de référence à un premier taux de variation, et qu'à l'extérieur du diamètre de référence le rayon de courbure de points sur la surface postérieure varie sensiblement linéairement avec la distance à partir de l'axe de référence à un second taux de variation, le second taux de variation étant supérieur au premier taux de variation, moyennant quoi la partie porteuse a une forme universelle s'adaptant à la plupart des yeux normaux.

2. Lentille de contact selon la revendication 1, le diamètre de référence étant d'environ 10 mm à partir de l'axe de référence.

3. Lentille de contact selon la revendication 1, la partie porteuse étant conçue de sorte à avoir une variation circonférentielle du rayon de courbure en forme d'onde M inversée à une distance fixe à partir de l'axe de référence, présentant un rayon de courbure maximal à un point situé au bord de la partie porteuse le plus proche du nez lorsque la lentille est portée, le rayon de courbure diminuant continuellement en allant vers le haut le long de la partie porteuse jusqu'à ce qu'il atteigne un minimum à proximité d'une extrémité verticale supérieure de la partie porteuse, augmentant continuellement jusqu'à ce qu'il atteigne une valeur intermédiaire au bord de la partie porteuse le plus éloigné du nez, diminuant continuellement jusqu'à un minimum au bord verticalement le plus bas de la partie porteuse, et augmentant continuellement jusqu'à ce qu'il revienne à son maximum au bord de la partie porteuse le plus proche du nez.

4. Lentille de contact selon la revendication 3, la forme d'onde M ayant une amplitude d'environ 0,2 mm et une valeur intermédiaire d'environ 0,05 mm au-dessus du minimum à un angle polaire d'environ 180°.

5. Lentille de contact selon la revendication 1 ou 3, le premier taux de variation étant d'environ 0,13.

6. Lentille de contact selon la revendication 1 ou 3, le second taux de variation étant d'environ 0,45.

7. Lentille de contact selon la revendication 1, 5 ou 6, la lentille ayant un rayon de courbure d'environ 7,6 mm à un diamètre d'environ 7 mm et un rayon de courbure d'environ 9 mm à un diamètre de 12 mm.

8. Lentille de contact selon la revendication 1, la partie optique étant conçue de sorte à avoir une variation de courbure circonférentielle en forme d'onde M, et présentant la moindre courbure de surface à un point situé à un premier point de référence sur la partie optique, la courbure de surface augmentant continuellement en allant vers le haut autour de la partie optique, jusqu'à ce qu'elle atteigne un maximum à un deuxième point de référence, la courbure de surface diminuant continuellement jusqu'à ce qu'elle atteigne une valeur intermédiaire à un troisième point de référence, augmentant continuellement jusqu'à un maximum à un quatrième point de référence, et diminuant continuellement jusqu'à ce qu'elle revienne à son minimum au premier point de référence.

9. Lentille de contact selon la revendication 8, la forme d'onde M ayant une amplitude d'environ 2,5 dioptries, une valeur intermédiaire d'environ 0,5 dioptrie en dessous du maximum et une valeur minimale d'environ 40 dioptries.

10. Lentille de contact selon la revendication 8, le premier point de référence étant décalé de façon rotative d'environ 20° par rapport au point de la partie optique le plus proche du nez lorsque la lentille est portée et les deuxième, troisième et quatrième points de référence étant décalés de façon rotative respectivement d'environ 90°, 180° et 270° à partir du premier point de référence.

# FIG. 1

CORNEAL IMAGE CAPTURE SYSTEM  610

X,Y data  612

ELEVATION ANALYSIS PROGRAM  620

X,Y,Z data  622

COMPUTER AIDED DESIGN SYSTEM  630

632

CORNEA/LENS SHAPING SYSTEM  650

642

COMMAND PROCESSOR  640

12

EP 2 259 741 B1

LOCAL
Z

FIG. 4

108

52

112

5°

110

X

5°

116

114

106'

Y

FIG. 2

+ + + + + + + + + +
+ + + + + + + + + +
+ + + + + + + + + +
+ + + + + + + + + +
+ + + + + + + + + +
+ + + + + + + + + +
+ + + + + + + + + +
+ + + + + + + + + +
+ + + + + + + + + +
+ + + + + + + + + +
+ + + + + + + + + +

100

Y

X

100

106'

102

104

FIG. 3

104

Y

X

102

## Average Change In Shape At Axis 0

**Fig. 5**

**(A)**

## Average Change In Shape At Axis 90

**(B)**

## Average Change in Shape At Axis 180

**(C)**

## Average Change In Shape At Axis 270

**(D)**

**Average Best Fit Radius Value At 12 mm Versus Axis**

(A)

**Average Best Fit Radius Value At 11 mm Versus Axis**

(B)

**Average Best Fit Radius Value At 10 mm Versus Axis**

(C)

# Fig. 6

**Fig. 6**
(continued)

(A)

(B)

**Fig. 7**

**Fig. 7**
(continued)

**Average Change In Z Depth at Axis 0**

(A)

**Average Change In Z Depth at Axis 90**

(B)

**Average Change In Z Depth at Axis 180**

(C)

**Fig. 8**

**Average Change In Z Depth at Axis 270**

**(D)**

## Fig. 8
(continued)

**Average Z Depth Summary For All Eyes**

## Fig. 9

**Fig. 10**

**Average Z Depth At A 9 mm Diameter For All Eyes**

(D)

**Average Z Depth At An 8 mm Diameter For All Eyes**

(E)

**Average Z Depth At A 7 mm Diameter For All Eyes**

(F)

## Fig. 10

(continued)

## LE Natural Half-Meridian Arcs

(A)

## LE Back Arcs In M Wave Pattern

(B)

## LE Front Surface Adjusted For Refraction

(C)

# Fig. 11

Fig. 12

# Fig. 13

Diopters vs Angle

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 0763572 W
- WO 2007104013 A
- US 5807381 A
- US 031763 W
- WO 03101341 A

**Non-patent literature cited in the description**

- **MANDELL.** Locating the Corneal Sighting Center From Videokeratography. *J. Refractive Surgery,* July 1995, vol. 11, 253-259